# EUROPÄISCHE PATENTSCHRIFT

(11) **EP 3 980 223 B1**
(45) Veröffentlichungstag und Bekanntmachung des Hinweises auf die Patenterteilung: **18.09.2024**
(21) Anmeldenummer: 20728748.3
(22) Anmeldetag: 27.05.2020
(51) Int. Cl.: B25J 9/16, G05B 19/409

(54) **VERFAHREN UND SYSTEM ZUR AUTOMATISCHEN ABSICHERUNG EINES MITTELS EINER MOBILEN BEDIENVORRICHTUNG GESTEUERTEN BETRIEBS EINES ROBOTERSYSTEMS**
METHOD AND SYSTEM FOR AUTOMATICALLY SECURING THE OPERATION OF A ROBOT SYSTEM, SAID OPERATION BEING CONTROLLED BY MEANS OF A MOBILE OPERATING DEVICE
PROCÉDÉ ET SYSTÈME PERMETTANT D'ASSURER AUTOMATIQUEMENT LE FONCTIONNEMENT D'UN SYSTÈME DE ROBOT COMMANDÉ AU MOYEN D'UN DISPOSITIF D'ACTIONNEMENT MOBILE

(30) Priorität: 07.06.2019 DE 102019208314
(43) Veröffentlichungstag der Anmeldung: 13.04.2022
(73) Patentinhaber: KUKA Deutschland GmbH, 86165 Augsburg (DE)
(72) Erfinder: SCHMIRGEL, Volker, 86199 Augsburg (DE); LAQUAI, Florian, 86316 Friedberg (DE)
(74) Vertreter: Oelke, Jochen
(86) Internationale Anmeldenummer: PCT/EP2020/064701
(87) Internationale Veröffentlichungsnummer: WO 2020/244997

(56) Entgegenhaltungen:
- DE-A1- 102016 211 243
- US-A1- 2004 148 058
- US-A1- 2008 125 908

## Beschreibung

Die vorliegende Erfindung betrifft das Gebiet der Bedienung eines Robotersystems mittels einer bezüglich des Robotersystems externen mobilen Bedienvorrichtung. Insbesondere betrifft die Erfindung Verfahren und ein System zur automatischen Absicherung des mittels einer solchen mobilen Bedienvorrichtung gesteuerten Betriebs eines Robotersystems sowie entsprechende Komponenten des Systems.

Ein Robotersystem im Sinne der Erfindung ist ein System, das zumindest einen Roboter aufweist. Zusätzlich kann das System optional auch Peripheriekomponenten für den bzw. die Roboter aufweisen, wie etwa Schutzvorrichtungen, Werkstück- oder Werkzeughalterungen oder -ablagen oder auswechselbare Werkzeuge für den bzw. die Roboter. Zudem weist ein Robotersystem zumindest eine Steuerungsvorrichtung zur Steuerung des bzw. der Roboter, insbesondere von dessen bzw. deren Antrieben, auf.

Moderne Robotersysteme, beispielsweise zur Verwendung in der Automobilproduktion, sind häufig in der Lage, sehr schnelle und komplexe Bewegungen auszuführen. Zudem werden bei vielen Anwendungen mehrere voneinander unabhängig oder im Verbund operierende Robotersysteme in unmittelbarer räumlicher Nähe zueinander eingesetzt oder ein solches Robotersystem weist selbst eine Mehrzahl einzelner Roboter auf, die jeweils einer gemeinsamen Systemsteuerung unterliegen. Beim Auftreten von Fehlfunktionen oder Ausfällen eines Robotersystems können schnell Gefahrensituationen für Personen oder Gegenstände im Wirkungsbereich des Robotersystems entstehen, die umgehend erkannt und abgestellt werden müssen. Es ist somit zweckmäßig, dass aus Sicherheitsgründen Bewegungen oder sonstige sicherheitsrelevante Aktionen eines Robotersystems nur dann ausgelöst werden können, wenn sich ein Bediener in einer zu dessen Beaufsichtigung ausreichenden Nähe zudem Robotersystem, insbesondere zu einer Notaus-Auslösung für das Robotersystem, befindet.

Dies wird bei bekannten Systemen üblicherweise dadurch sichergestellt, dass sich ein Notausschalter an einem zum Robotersystem gehörenden und diesem fest zugeordneten speziellen Bediengerät in der näheren Umgebung des Roboters, insbesondere an einer entsprechenden Roboterzelle befindet. Solche Bediengeräte sind üblicherweise kabelgebunden, sodass nur dann durch den Bediener Bewegungen des Robotersystems ausgelöst werden können, wenn das Bediengerät in kabelgebundener Signalverbindung mit dem Robotersystem, insbesondere einer zugehörigen Steuervorrichtung, steht und sich damit aufgrund der regelmäßig kurzen Länge solcher Kabelverbindungen in der Nähe des Robotersystems befindet. Somit wird sichergestellt, dass der Bediener den Betrieb des Robotersystems, insbesondere visuell, aufgrund seiner zu dessen Bedienung erforderlichen Anwesenheit vorort überwachen kann.

Die US 2008/125908 A1 zeigt ein Robotersystem mit einer mobilen Bedienvorrichtung die eingerichtet ist zur kabellosen Steuerung eines oder mehrerer Roboter des Systems. Die mobile Bedienvorrichtung kann sich dazu mit der Steuerung eines Roboters verbinden, wobei die Verbindung erst dann etabliert wird, sobald sich die mobile Bedienvorrichtung in einem vorher bestimmten Bereich um die Steuerung befindet.

Der vorliegenden Erfindung liegt die Aufgabe zugrunde, die Bedienung eines Robotersystems unter Wahrung der erforderlichen Sicherheit weiter zu verbessern, insbesondere flexibler auszugestalten.

Eine Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Ein erster Aspekt der Erfindung betrifft ein Verfahren zur automatischen Absicherung eines mittels einer mobilen Bedienvorrichtung gesteuerten Betriebs eines Robotersystems. Das Verfahren weist auf: (i) Wiederholtes Empfangen, am Robotersystem, insbesondere an einer Steuervorrichtung desselben und über eine kurzreichweitige erste Signalverbindung, von an das Robotersystem durch eine zu seiner Bedienung konfigurierte mobile Bedienvorrichtung übermittelten Anwesenheitssignalen; (ii) Übermitteln eines aus dem Ergebnis der Anwesenheitsprüfung abgeleiteten Konfigurationssignals an die Bedienvorrichtung zur Anforderung einer Konfiguration einer zur Bedienung des Robotersystems vorgesehenen Benutzerschnittstelle der Bedienvorrichtung in Abhängigkeit von dem Ergebnis; (iii) Empfangen, am Robotersystem und über eine von der ersten Signalverbindung unabhängig ausgebildete zweite Signalverbindung, eines durch die Bedienvorrichtung an das Robotersystem übermittelten Betriebssignals, welches einen gemäß einem vorbestimmten Sicherheitskriterium als sicherheitsrelevant eingestuften Steuerbefehl, insbesondere einen Bewegungsbefehl, für das Robotersystem enthält; (iv) Freigeben des sicherheitsrelevanten Steuerbefehls zu seiner Ausführung durch das Robotersystem nur dann, wenn bei einer Anwesenheitsprüfung festgestellt wird, dass das zuletzt empfangene Anwesenheitssignal ein im Hinblick auf die Feststellung einer räumlichen Nähe der Bedienvorrichtung zu dem Robotersystem vorbestimmtes Anwesenheitskriterium erfüllt.

Das Verfahren kann insbesondere gänzlich auf dem zu steuernden Robotersystem, insbesondere einer Steuervorrichtung desselben, ausgeführt werden. Alternativ dazu, kann der Schritt (iv) jedoch auch außerhalb des Robotersystems selbst, beispielsweise mittels einer mit dem Robotersystem in Kommunikationsverbindung stehenden externen Datenverarbeitungseinheit, ausgeführt werden.

Unter einer "kurzreichweitigen" Signalverbindung im Sinne der Erfindung ist eine Signalverbindung zu verstehen, deren effektive Reichweite für eine erfolgreiche Signalübertragung an einen Empfänger typischerweise, insbesondere gemäß einer zugrunde liegenden technischen Spezifikation einer entsprechenden Signalübertragungstechnologie, im Bereich von bis zu 50 m, bevorzugt nur im Bereich von bis zu 10 m liegt. Zu den kurzreichweitige Signalverbindungen gehören insbesondere Signalverbindungen auf Basis einer sogenannten "Wireless Personal Area Network (WPAN)-Technologie. Einige solcher WPAN-Technologien sind bei IEEE im Rahmen der Standardfamilie IEEE 802.15 definiert. Dazu gehören insbesondere die Bluetooth- und Zigbee- Technologien. Auch die bei IETF spezifizierte 6LoWPAN ist eine "kurzreichweitige" Signalverbindung im Sinne der Erfindung.

Unter einer "mobilen" Bedienvorrichtung im Sinne der Erfindung ist eine Vorrichtung zu verstehen, die eingerichtet ist, einem Benutzer eine Mensch-Maschine-Schnittstelle zur zumindest teilweisen Bedienung und/oder Konfigurierung eines Robotersystems zur Verfügung zu stellen, wobei die Bedienvorrichtung nicht ortsgebunden, sondern mobil, insbesondere tragbar und bevorzugt als handgehaltene Vorrichtung ausgebildet ist. Insbesondere kann die mobile Bedienvorrichtung anstelle einer anwendungsspezifischen Bedienkonsole auch ein mittels einer entsprechenden Programmierung zur Ausführung des Verfahrens konfigurierter Mehrzweckcomputer, etwa ein Tabletcomputer, sein. Somit ist es grundsätzlich möglich, dass eine solche Bedienvorrichtung zugleich eine Programmierung aufweist, die es erlaubt, auch andere Anwendungen auszuführen, die nicht der Bedienung des Robotersystems dienen.

Unter einem "Betriebssignal" im Sinne der Erfindung ist ein Signal, insbesondere ein digitales Signal zu verstehen, das dazu vorgesehen ist, das Robotersystem, insbesondere mittels zumindest eines entsprechenden in dem Signal enthaltenen Steuerbefehls, zu steuern oder von dem Robotersystem Daten, wie etwa Zustandsdaten, Programmdaten oder vom Robotersystem sensorisch erfasste Daten wie beispielsweise erfasste Bilddaten, zu empfangen.

Unter einem "sicherheitsrelevanten" Steuerbefehl im Sinne der Erfindung ist ein Steuerbefehl zur Ansteuerung des Robotersystems zu verstehen, der bei seiner Ausführung auf dem Robotersystem dieses veranlasst, eine oder mehrere sicherheitsrelevante, insbesondere potenziell für Gegenstände oder Personen im Umfeld eines Roboters des Robotersystems gefährliche Aktionen auszuführen. Insbesondere sind Bewegungsbefehle, also Steuerbefehle, die bei ihrer Ausführung auf dem Robotersystem dieses veranlassen, durch einen Roboter des Robotersystems eine oder mehrere Bewegungen auszuführen, jeweils sicherheitsrelevante Steuerbefehle im Sinne der Erfindung.

Unter einer "Anwesenheitsprüfung" im Sinne der Erfindung ist eine Prüfung zu verstehen, bei der geprüft wird, ob sich die Bedienvorrichtung in der Nähe des Robotersystems, insbesondere innerhalb eines durch einen Maximalabstand definierten nahen Umfelds des Robotersystems befindet. Die Anwesenheitsprüfung erfolgt auf Basis des zuletzt empfangenen Anwesenheitssignals und des empfangenen Betriebssignals oder einer Kombination beider Signale, mittels eines vorbestimmten Anwesenheitskriteriums, mit dessen Hilfe festgestellt wird, ob sich die Bedienvorrichtung in ausreichender Nähe zum Robotersystem befindet oder nicht.

Mit dem erfindungsgemäßen Verfahren kann somit eine Absicherung eines mittels der mobilen Bedienvorrichtung gesteuerten Betriebs eines Robotersystems durchgeführt werden, bei dem zum einen eine Freigabe von sicherheitsrelevanten Steuerbefehlen zu ihrer Ausführung durch das Robotersystem nur dann erfolgt, wenn aufgrund des Ergebnisses der Anwesenheitsprüfung, die wiederum von zumindest einem empfangenen Anwesenheitssignal abhängt, erkannt wurde, dass sich die Bedienvorrichtung in ausreichender Nähe zu dem Robotersystem, insbesondere einer Steuervorrichtung des Robotersystems, befindet. Im Sinne der Erfindung bedeutet hier "nur dann", dass zumindest die genannte Bedingung erfüllt sein muss (notwendige Bedingung), während diese nicht zwangsläufig auch schon hinreichend für die Freigabe der Ausführung des Steuerbefehls sein muss, da es grundsätzlich möglich ist, dass dazu noch weitere Bedingungen erfüllt sein müssen. Die Steuerungsvorrichtung ist vorzugsweise mit einem Notaus-Auslöser (Mensch-Maschine-Schnittstelle, z.B. Notausschalter) zur Auslösung durch einen Bediener ausgestattet.

Zum anderen ist eine Rückmeldung des Robotersystems an die Bedienvorrichtung vorgesehen, indem ein aus dem Ergebnis der Anwesenheitsprüfung abgeleitetes Konfigurationssignal an die Bedienvorrichtung zurückübermittelt wird, um dort eine Konfiguration einer Benutzerschnittstelle der Bedienvorrichtung, welche zur Bedienung des Robotersystems dient, in Abhängigkeit von dem Prüfungsergebnis zu bewirken. Somit lässt sich insbesondere sicherstellen, dass an der Bedienvorrichtung nur solche Funktionalitäten, insbesondere Aktionen, des Robotersystems ausgelöst werden können, die angesichts der durch die Anwesenheitsprüfung überprüften aktuellen Entfernung der Bedienvorrichtung von dem Robotersystem mit ausreichender Sicherheit durchgeführt werden können.

Somit wird eine Bedienung des Robotersystems mittels der mobilen Bedienvorrichtung ermöglicht, was zum einen eine größere Bewegungsfreiheit des Bedieners und somit eine entsprechende Flexibilität bei der Bedienung des Robotersystems ermöglicht, während zum anderen zugleich aufgrund der Anwesenheitsprüfung mit der davon abhängigen Freigabeentscheidung für sicherheitsrelevante Steuerbefehle und der ergebnisabhängigen Konfigurationsanforderung bezüglich der Benutzerschnittstelle der Bedienvorrichtung die erforderliche Sicherheit gewahrt werden kann. Zudem ermöglicht die Erfindung eine flexiblere Wahl der Bedienvorrichtung.

Nachfolgend werden bevorzugte Ausführungsformen des Verfahrens beschrieben, die jeweils, soweit dies nicht ausdrücklich ausgeschlossen wird oder technisch unmöglich ist, beliebig miteinander sowie mit den weiteren beschriebenen anderen Aspekten der Erfindung kombiniert werden können.

Bei einigen Ausführungsformen ist das Konfigurationssignal ausgestaltet, eine Konfiguration der Benutzerschnittstelle anzufordern, bei der die für einen Benutzer verfügbaren Bedienoptionen an der Benutzerschnittstelle für das Robotersystem in Abhängigkeit von dem Ergebnis festgelegt werden. Insbesondere kann dies so erfolgen, dass wenn gemäß dem Ergebnis der Anwesenheitsprüfung das Anwesenheitskriterium nicht erfüllt wurde, das Konfigurationssignal ausgestaltet ist, eine Konfiguration der Benutzerschnittstelle anzufordern, gemäß der die für eine Benutzer verfügbaren Bedienoptionen an der Benutzerschnittstelle für das Robotersystem so eingeschränkt werden, dass von der Benutzerschnittstelle aus keine Übermittlung von sicherheitsrelevanten Steuerbefehlen an das Robotersystem ausgelöst werden kann.

Wenn also gemäß der Anwesenheitsprüfung festgestellt wird, dass sich die Bedienvorrichtung gemäß einem durch das Anwesenheitskriterium definierten Maßstab zu weit von dem Robotersystem entfernt befindet, wird durch das Konfigurationssignal eine Konfiguration der Benutzerschnittstelle, die beispielsweise mittels eines berührungsempfindlichen Bildschirms ausgebildet ist, angefordert, bei der Auswahlmöglichkeiten für einen Bediener zur Auslösung von sicherheitsrelevanten Steuerbefehlen entweder gar nicht mehr angezeigt oder aber zumindest gesperrt werden, um ein sicherheitskritisches Auslösen solcher Steuerbefehle von vornherein zu verhindern. Somit ist hier eine doppelte Sicherheit vorgesehen, nämlich einerseits durch die entsprechende Konfiguration der Benutzerschnittstelle aufgrund des Konfigurationssignals sowie andererseits aufgrund der von dem Ergebnis der Anwesenheitsprüfung abhängigen Freigabe bzw. Nicht-Freigabe der tatsächlichen Ausführung von empfangenen Steuerbefehlen durch das Robotersystem.

Bei einigen Ausführungsformen wird jedes über die zweite Signalverbindung empfangene und einen Steuerbefehl enthaltenden Betriebssignal vor einer etwaigen Freigabe dieses Steuerbefehls zu seiner Ausführung auf dem Robotersystem einer Sicherheitsprüfung dahingehend unterzogen, ob dieser Steuerbefehl gemäß einem vorbestimmten Sicherheitskriterium sicherheitsrelevant ist. Nur falls dies gemäß dem Ergebnis dieser Prüfung nicht der Fall ist, wird dieser Steuerbefehl sodann ohne oder unabhängig von einer vorherigen Durchführung der Anwesenheitsprüfung oder deren Ergebnis zu seiner Ausführung auf dem Robotersystem freigegeben. Auf diese Weise ist eine Unterscheidung zwischen sicherheitsrelevanten und nicht sicherheitsrelevanten Steuerbefehlen möglich. Während als nicht sicherheitsrelevant erkannte Steuerbefehle ohne weiteres, insbesondere ohne Durchführung der Anwesenheitsprüfung, zur Ausführung freigegeben werden, bleibt die sicherheitsbezogene Überprüfung mittels der Anwesenheitsprüfung und der davon abhängigen Freigabe von als sicherheitsrelevant erkannten Steuerbefehlen weiterhin erhalten. Somit können die durchschnittliche Performanz und Effizienz des Verfahrens weiter gesteigert werden.

Insbesondere kann gemäß einer zugehöriger Ausführungsformen die Unterscheidung so erfolgen, dass gemäß dem Sicherheitskriterium (i) solche Steuerbefehle, die dazu dienen, das Robotersystem zu veranlassen, eine oder mehrere Bewegungen auszuführen, als sicherheitsrelevant eingestuft werden, und/oder (ii) solche Steuerbefehle, die dazu dienen, das Robotersystem zu veranlassen, Informationen (z.B. Status- oder Betriebsinformationen oder Programmdaten) auszugeben oder zu ändern, ohne dabei zusätzlich eine Bewegung des Robotersystems zu veranlassen, als nicht sicherheitsrelevant eingestuft werden. Auf diese Weise werden Steuerbefehle zur Veranlassung einer oder mehrerer Bewegungen des Robotersystems, die typischerweise bei Anwesenheit einer Person oder eines bei der Programmierung des Robotersystems nicht berücksichtigten Gegenstands in seinem Wirkungsbereich ein Gefährdungspotenzial mit sich bringen, als sicherheitsrelevant eingestuft und entsprechend im Rahmen des Verfahrens nur in Abhängigkeit vom Ergebnis der Anwesenheitsprüfung ausgeführt, während die allein auf die Ausgabe von Informationen bezogen Steuerbefehle demgegenüber als unkritisch eingestuft werden, und somit auf direktem Wege unabhängig von einer Anwesenheitsprüfung oder deren Ergebnis ausgeführt werden.

Bei einigen Ausführungsformen ist das Anwesenheitskriterium in Abhängigkeit von zumindest einem der folgenden definiert: (i) einer Signalstärke des am Robotersystem empfangenen Anwesenheitssignals; (ii) einem Maß für das etwaige Auftreten von Übertragungsfehlern im am Robotersystem empfangenen Anwesenheitssignal; (iii) einer seit einem letzten Empfang eines Anwesenheitssignals abgelaufenen Zeitspanne; (iv) einer etwaigen, seit einem letzten Empfang eines Anwesenheitssignals, gemäß entsprechender in dem empfangenen Betriebssignal enthaltenen Informationen erfolgten Änderung einer Identifikationskennung des Funkzugangspunkts, eines Routings für die Funkanbindung der Bedienvorrichtung über die erste Signalverbindung oder die zweite Signalverbindung, oder beide; (v) einem mittels einer funkbasierten Triangulation bestimmten Abstandswert.

Da die Signalstärke eines Funksignals typischerweise mit zunehmenden Abstand abnimmt, kann gemäß Variante (i) die Signalstärke als ein Maß für eine Entfernung zwischen der Bedienvorrichtung und einem entsprechenden Empfänger am Robotersystem dienen, was zu einer einfachen Entfernungsmessung herangezogen werden kann. Auch das entfernungsabhängige Auftreten von Übertragungsfehlern, insbesondere von Bitfehlern im Rahmen einer digitalen Übertragung, die beispielsweise mittels einer entsprechenden Kanalkodierung erkannt werden können, kann gemäß Variante (ii) als Maß, etwa in Form einer Bitfehlerrate oder eines anderen vom Auftreten von Übertragungsfehlern abhängigen Maßes, für die Abschätzung der Entfernung zwischen der Bedienvorrichtung und dem Empfänger am Robotersystem herangezogen werden. Gemäß Variante (iii) ist das Anwesenheitskriterium in Abhängigkeit von einer seit einem letzten Empfang eines Anwesenheitssignals abgelaufenen Zeitspanne definiert, wodurch bei entsprechend kurzer Wahl der Zeitspanne sichergestellt werden kann, dass nicht irrtümlich aufgrund eines schon länger zurückliegenden Anwesenheitssignals auf eine ausreichende Nähe der Bedienvorrichtung zu Rohrsystem geschlossen wird, obwohl tatsächlich sich die Entfernung inzwischen vergrößert hat, und möglicherweise die erforderliche Sicherheit nicht mehr gewahrt werden kann. Gemäß Variante (iv), kann ebenso indirekt auf eine möglicherweise erfolgte signifikante Ortsänderung der Bedienvorrichtung geschlossen werden, was hier dadurch erfolgt, dass entsprechende Änderungen des Signalwegs bezüglich der ersten und/oder zweiten Signalverbindung erkannt werden, die ohne eine solche Ortsveränderung ausgeschlossen oder zumindest unwahrscheinlich wären.

Bei einigen Ausführungsformen weist das Verfahren des Weiteren auf: (i) Detektieren einer in dem empfangenen Anwesenheitssignal, Betriebssignal oder beiden enthaltenen Codierung; (ii) Prüfen anhand der detektierten Codierung, ob sie mit einer dem Robotersystem zugeordneten Referenzcodierung übereinstimmt und somit das empfangene Anwesenheitssignal, Betriebssignal oder beide an das Robotersystem gerichtet ist bzw. sind; und (iii) Blockieren einer etwaigen Freigabe des im empfangenen Betriebssignal enthaltenen Steuerbefehls, falls gemäß der detektierten Codierung das empfangene Anwesenheitssignal, Betriebssignal oder beide nicht an das Robotersystem gerichtet ist bzw. sind. Auf diese Weise kann mittels der Codierung sichergestellt werden, dass das Robotersystem nicht fehlerhaft mittels einer dazu nicht vorgesehenen bzw. nicht dazu autorisierten Bedienvorrichtung gesteuert wird, oder die Anwesenheitsprüfung auf Basis eines nicht dem Robotersystem zugeordneten Bedienvorrichtung durchführt. Somit kann die Sicherheit bezüglich der Steuerung des Robotersystems weiter erhöht werden und zudem die Möglichkeit geschaffen werden, mehrere Robotersysteme und Bedienvorrichtung in großer räumlicher Nähe zueinander (d. h. innerhalb der Reichweite der entsprechenden Anwesenheitssignale) zu betreiben, ohne dass es zu einer Fehlzuordnung von Anwesenheitssignalen und Betriebssignalen zu entsprechenden Robotersystemen kommt. Die Codierung kann insbesondere auf Basis einer Seriennummer des Robotersystems oder der Bedienvorrichtung festgelegt werden.

Insbesondere kann das Verfahren gemäß einiger zugehöriger Ausführungsformen des Weiteren einen Pairing-Prozess aufweisen, bei dem das Robotersystem: (i) vor dem Detektieren die ihm zugeordnete Referenzcodierung festlegt und an die Bedienvorrichtung übermittelt, insbesondere um diese in die Lage zu versetzen die Codierung in eine Anwesenheitssignal oder Betriebssignal einzubringen, oder (ii) vor dem Prüfen die ihm zugeordnete Referenzcodierung von der Bedienvorrichtung empfängt, insbesondere, um auf deren Basis an das Robotersystem gerichtete Anwesenheitssignale und Betriebssignale als dem Robotersystem zugeordnete Signale zu identifizieren und von anderen Signalen zu unterscheiden und von dem Robotersystem an die Bedienvorrichtung zu übermittelnde Signale, insbesondere das Konfigurationssignal, mit der Codierung zu versehen.

Ein zweiter Aspekt der Erfindung betrifft eine Vorrichtung, insbesondere eine Steuerungsvorrichtung eines Robotersystems, zur Absicherung eines mittels einer mobilen Bedienvorrichtung gesteuerten Betriebs eines bzw. des Robotersystems, wobei die Vorrichtung zur Ausführung des Verfahrens nach dem ersten Aspekt der Erfindung eingerichtet ist.

Ein dritter Aspekt der Erfindung betrifft ein Computerprogramm, das konfiguriert ist, bei seiner Ausführung auf einer Vorrichtung nach dem zweiten Aspekt der Erfindung diese zu veranlassen, das Verfahren nach einem der vorausgehenden Ansprüche auszuführen.

Die in Bezug auf den ersten Aspekt der Erfindung erläuterten Ausführungsformen und Vorteile gelten entsprechend auch für den zweiten und den dritten Aspekt der Erfindung.

Ein vierter Aspekt der Erfindung betrifft ein Verfahren zur Bedienung eines Robotersystems mittels einer mobilen Bedienvorrichtung, wobei das Verfahren aufweist: (i) Regelmäßiges Übermitteln eines an das Robotersystem gerichteten Anwesenheitssignals über eine kurzreichweitige erste Signalverbindung; (ii) nach dem Übermitteln des Anwesenheitssignals, Empfangen, eines Konfigurationssignals von dem Robotersystem, wobei das Konfigurationssignal eine Konfigurationsanforderung zur Konfiguration einer zur Bedienung des Robotersystems vorgesehenen Benutzerschnittstelle der Bedienvorrichtung darstellt oder enthält; (iii) Konfigurieren der Benutzerschnittstelle in Abhängigkeit von der Konfigurationsanforderung im empfangenen Konfigurationssignal; und (iv) Übermitteln eines an das Robotersystem gerichteten Betriebssignals über eine von der ersten Signalverbindung unabhängig ausgebildete zweite Signalverbindung in Reaktion auf eine zugeordneten Eingabe an der gemäß dem Konfigurationssignal konfigurierten Benutzerschnittstelle.

Dieses Verfahren bildet somit das Gegenstück zu dem Verfahren gemäß dem ersten Aspekt der Erfindung, und ist zum Zusammenwirken mit diesem vorgesehen. Das regelmäßige Übermitteln, (sowie das robotersystemseitige wiederholte Empfangen) des Anwesenheitssignals dient dazu, regelmäßig, insbesondere fortlaufend sicherzustellen, dass die relative Entfernung der Bedienvorrichtung zum Robotersystem zeitnah im Rahmen der Anwesenheitsprüfung geprüft und deren Ergebnis als Grundlage für die Auslösung und Durchführung von mittels der Bedienvorrichtung abgesetzten Steuerbefehlen sowie zur Konfiguration der Benutzerschnittstelle verwendet werden kann, um eine zumindest im wesentlichen lückenlose Absicherung der Bedienung des Robotersystems zu bewirken.

Nachfolgend werden bevorzugte Ausführungsformen dieses Verfahrens beschrieben, die jeweils, soweit dies nicht ausdrücklich ausgeschlossen wird oder technisch unmöglich ist, beliebig miteinander sowie mit den weiteren beschriebenen anderen Aspekten der Erfindung kombiniert werden können.

Bei einigen Ausführungsformen werden das Anwesenheitssignal, das Betriebssignal oder beide mit einer dem Robotersystem zugeordneten Referenzcodierung versehen, die kennzeichnet, dass das jeweilige Signal an das Robotersystem gerichtet ist. Die Codierung kann wiederum, wie schon vorausgehend genannt, insbesondere auf Basis einer Seriennummer der Bedienvorrichtung oder des Robotersystems festgelegt sein oder werden.

Bei einigen Ausführungsformen weist das Verfahren des Weiteren einen Pairing-Prozess auf, bei dem die Bedienvorrichtung: (i) von dem Robotersystem eine diesem zugeordnete Referenzcodierung empfängt, oder (ii) vor dem Übermitteln des Anwesenheitssignals die dem Robotersystem zugeordnete Referenzcodierung generiert und übermittelt. Dieser Pairing-Prozess korrespondiert somit spiegelbildlich zu dem bereits im Zusammenhang mit dem ersten Aspekt der Erfindung beschriebenen und kann insbesondere mit diesem im Sinne einer von zwei Seiten desselben Prozesses zusammenfallen.

Bei einigen Ausführungsformen bewirkt das Konfigurieren der Benutzerschnittstelle eine Konfiguration der Benutzerschnittstelle, gemäß der die für eine Benutzer verfügbaren Bedienoptionen an der Benutzerschnittstelle für das Robotersystem so eingeschränkt werden, dass von der Benutzerschnittstelle aus keine Übermittlung von sicherheitsrelevanten Steuerbefehlen an das Robotersystem ausgelöst werden kann. Insbesondere kann die Konfiguration der Benutzerschnittstelle eine Konfiguration der dem Benutzer daran zur Verfügung gestellten Auswahlmöglichkeiten dahingehend umfassen, dass Auswahlmöglichkeiten für sicherheitsrelevante Steuerbefehle nicht mehr zur Verfügung gestellt oder gesperrt werden. Im Falle einer graphischen Benutzerschnittstelle kann dies insbesondere dadurch erfolgen, dass Schaltflächen oder andere Steuerelemente für die Auslösung sicherheitsrelevanter Steuerbefehle gar nicht mehr angezeigt werden oder zumindest nicht mehr aktiviert werden können, d.h. gesperrt werden. Letzteres kann insbesondere mit einer entsprechenden Veränderung ihrer Anzeige gekennzeichnet werden, beispielsweise durch eine farblich oder anderweitig veränderte Darstellung.

Nachfolgend werden bevorzugte Ausführungsformen beschrieben, die jeweils auf beide vorgenannten Verfahren zutreffen und, soweit dies nicht ausdrücklich ausgeschlossen wird oder technisch unmöglich ist, beliebig miteinander sowie mit den weiteren beschriebenen anderen Aspekten der Erfindung kombiniert werden können.

Bei einigen Ausführungsformen wird die erste Signalverbindung als eines der folgenden ausgebildet: (i) eine kurzreichweitige, insbesondere auf einer WPAN-Funktechnologie basierende, Funkverbindung; (ii) eine über einen, insbesondere als Kopfhöreranschluss konfigurierten, Audioausgang der mobilen Bedienvorrichtung geführte kabelgebundene Verbindung.

Als Wireless Personal Area Network-(WPAN) Funktechnologien werden Kurzstrecken-Funktechnologien bezeichnet, die zum Ziel haben, kurze, typische fliegend verlegte Kabelverbindungen zu vermeiden. Im Gegensatz zu WLANs überbrücken WPANs kürzere Distanzen - typisch sind Entfernungen zwischen 0,2 Meter (m) und 50 m. Damit wird nur das unmittelbare Umfeld des Senders erreicht, der "persönliche Bereich". Insbesondere sind die gemäß IEEE 802.15 standardisierten Funktechnologien, wozu wiederum insbesondere Bluetooth und Zigbee gehören, jeweils WPAN-Technologien. Gleiches gilt insbesondere auch für die bei IETF spezifizierte 6LoWPAN Technologie.

Bei einigen Ausführungsformen weist die zweite Signalverbindung eine größere Bandbreite auf als die erste Signalverbindung. Auf diese Weise ist es insbesondere möglich, für das Anwesenheitssignal eine schmalbandige kurzreichweitige Funktechnologie zu verwenden, während die zweite Signalverbindung als demgegenüber breitbandigere Datenverbindung genutzt werden kann, über die insbesondere nicht nur Steuerbefehle, sondern auch andere, vor allem auch umfangreichere Informationen, wie etwa Programminformationen für das Robotersystem oder Statusberichte über dessen Zustand usw. performanter als über die erste Datenverbindung übermittelt werden können. Zudem kann die Reichweite der zweiten Signalverbindung größer gewählt sein, als die der ersten Signalverbindung, sodass der Datenaustausch über die zweite Datenverbindung auch über größere Entfernungen als mit der ersten Datenverbindung möglich erfolgen kann. Insbesondere kann die zweite Datenverbindung mittels einer WLAN Technologie, insbesondere einer gemäß IEEE 802.11 standardisierten Funktechnologie, implementiert sein.

Ein fünfter Aspekt der Erfindung betrifft eine mobile Bedienvorrichtung, insbesondere einen handgehaltenen mobilen Mehrzweckcomputer, die zur Ausführung des Verfahrens nach dem vierten Aspekt der Erfindung konfiguriert ist.

Ein sechster Aspekt der Erfindung betrifft ein Computerprogramm, das konfiguriert ist, bei seiner Ausführung auf einer mobilen Bedienvorrichtung nach dem fünften Aspekt der Erfindung diese zu veranlassen, das Verfahren nach dem vierten Aspekt der Erfindung auszuführen.

Die in Bezug auf den vierten Aspekt der Erfindung erläuterten Ausführungsformen und Vorteile gelten entsprechend auch für den fünften und den sechsten Aspekt der Erfindung.

Ein siebter Aspekt der Erfindung betrifft schließlich ein System zur Absicherung eines mittels einer mobilen Bedienvorrichtung gesteuerten Betriebs eines Robotersystems, das eine Vorrichtung nach dem zweiten Aspekt der Erfindung sowie eine Bedienvorrichtung nach dem fünften Aspekt der Erfindung aufweist. Auch das Robotersystem selbst kann als Ganzes Teil dieses Systems sein.

Die in Bezug auf die anderen Aspekte der Erfindung erläuterten Ausführungsformen und Vorteile gelten somit entsprechend auch für den siebten Aspekt der Erfindung.

Das jeweilige Computerprogramm nach dem dritten bzw. dem sechsten Aspekt der Erfindung kann insbesondere auf einem nichtflüchtigen Datenträger gespeichert sein. Bevorzugt ist dies ein Datenträger in Form eines optischen Datenträgers oder eines Flashspeichermoduls. Dies kann vorteilhaft sein, wenn das Computerprogramm als solches unabhängig von einer Prozessorplattform gehandelt werden soll, auf der das ein bzw. die mehreren Programme auszuführen sind. In einer anderen Implementierung kann das Computerprogramm als eine Datei auf einer Datenverarbeitungseinheit, insbesondere auf einem Server vorliegen, und über eine Datenverbindung, beispielsweise das Internet oder eine dedizierte Datenverbindung, wie etwa ein proprietäres oder lokales Netzwerk, herunterladbar sein. Zudem kann das Computerprogramm eine Mehrzahl von zusammenwirkenden einzelnen Programmodulen aufweisen.

Die Vorrichtung, die Bedienvorrichtung bzw. das System nach dem zweiten, fünften bzw. siebten Aspekt der Erfindung kann entsprechend einen Programmspeicher aufweisen, in dem das jeweilige zugehörige Computerprogramm abgelegt ist. Alternativ kann das die jeweilige Vorrichtung bzw. das System als Ganzes auch eingerichtet sein, über eine Kommunikationsverbindung auf ein extern, beispielsweise auf einem oder mehreren Servern oder anderen Datenverarbeitungseinheiten verfügbares Computerprogramm zuzugreifen, insbesondere um mit diesem Daten auszutauschen, die während des Ablaufs des Verfahrens bzw. Computerprogramms Verwendung finden oder Ausgaben des Computerprogramms darstellen.

Weitere Vorteile, Merkmale und Anwendungsmöglichkeiten der vorliegenden Erfindung ergeben sich aus der nachfolgenden detaillierten Beschreibung im Zusammenhang mit den Figuren.

### Dabei zeigt

**Fig. 1** schematisch ein beispielhaftes System gemäß einer Ausführungsform der Erfindung; und
die **Figuren 2A**, **B** ein Flussdiagramm zur Veranschaulichung bevorzugter Ausführungsformen der beiden erfindungsgemäßen Verfahren und von deren Zusammenwirken.

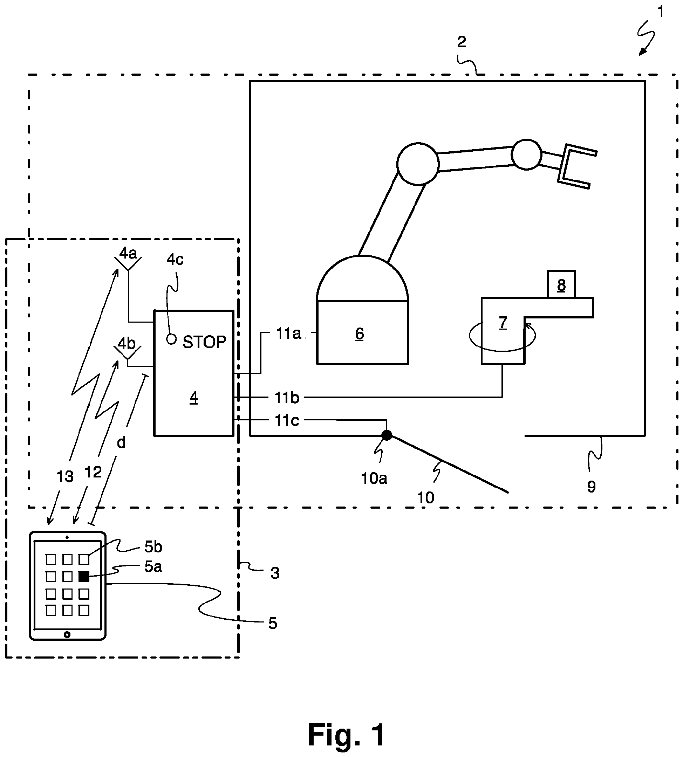

Das in Fig. 1 dargestellte System 1 weist als ein erstes Teilsystem ein Robotersystem 2, sowie als ein zweites Teilsystem ein System 3 zur automatischen Absicherung eines mittels einer mobilen Bedienvorrichtung 5 gesteuerten Betriebs des Robotersystems 2 auf. Das Robotersystem 2 weist einen Roboter 6 auf, der zusammen mit einer beweglichen, insbesondere zumindest abschnittsweise rotierbaren Peripherievorrichtung 7, auf der in der Darstellung gemäß Fig. 1 ein Werkstück 8 zur Verarbeitung durch den Roboter 6 gelagert ist. Des Weiteren kann das Robotersystem optional einen den Roboter 6 und die Peripherievorrichtung 7 umgebenden Schutzzaun 9 aufweisen, der zugleich eine Zelle des Robotersystems 2 definiert. In dem Schutzzaun 9 ist eine Tür 10 vorgesehen, die um eine angetriebene Achse 10a schwenkbar ist, um Bedien- oder Wartungspersonal einen Zugang zur Roboterzelle zu ermöglichen. Darüber hinaus weist das Robotersystem 2 eine außerhalb des Schutzzauns 9 angeordnete Steuerungsvorrichtung 4 zur Steuerung des Roboters 6 und seiner Peripherie, insbesondere der Peripherievorrichtung 7 und der Tür 10 bzw. ihres Türantriebs 10a, auf. Die Steuerung und sensorische Überwachung dieser Komponenten 6, 7 bzw. 10/10a durch die Steuerungsvorrichtung 4 erfolgt über entsprechende Steuer/Mess-Leitungen 11a, 11b bzw. 11c, die den Komponenten wie in Fig. 1 dargestellt zugeordnet sind und sie mit der Steuerungsvorrichtung 4 verbinden.

Die Steuerungsvorrichtung 4 bildet zugleich eine Komponente des Systems 3, sodass die beiden Teilsysteme 2 und 3 in Form der Steuervorrichtung 4 zumindest eine gemeinsame Komponente aufweisen. An der Steuerungsvorrichtung 4 sind eine erste Funkvorrichtung mit einer ersten Antenne 4a zum Senden und Empfangen von Funksignalen unter Verwendung einer kurzreichweitigen und ersten Funktechnologie, insbesondere Bluetooth, über eine erste Signalverbindung 12 zwischen der Steuerungsvorrichtung 4 und der Bedienvorrichtung 5 vorgesehen. Die Bedienvorrichtung 5 kann insbesondere - wie in Fig. 1 dargestellt - als Tabletcomputer ausgebildet sein.

Des Weiteren verfügt die Steuerungsvorrichtung 4 über eine zweite Funkvorrichtung mit einer zweiten Antenne 4b zum Senden und Empfangen von Betriebssignalen unter Verwendung einer von der ersten Funktechnologie verschiedenen, insbesondere breitbandigeren und/oder weiter reichenden, zweiten Funktechnologie, beispielsweise WLAN, über eine zweite Signalverbindung 13 zwischen der Steuerungsvorrichtung 4 und der sich davon gegenwärtig in einem räumlichen Abstand d von der Steuerungsvorrichtung befindenden Bedienvorrichtung 5. Die Steuerungsvorrichtung 4 weist zudem einen Notaus-Auslöser in Form eines Notausschalters auf, der dazu vorgesehen ist, von einem Bediener des Systems 1 im Notfall manuell aktiviert zu werden, um eine sofortige Notausschaltung des Robotersystems zu bewirken. In einer anderen, nicht dargestellten, Ausführungsform kann die erste Signalverbindung durch eine kabelgebundene Signalverbindung ersetzt oder ergänzt sein, die insbesondere über eine Audioschnittstelle der Bedienvorrichtung, etwa über eine Kopfhöreranschluss, geführt sein kann.

Die Bedienvorrichtung 5 weist eine konfigurierbare Benutzerschnittstelle mit verschiedenen virtuellen Tasten auf, zu denen insbesondere die virtuellen Tasten 5a, 5b gehören. Mittels der virtuellen Tasten kann jeweils die Übermittlung zumindest eines bestimmten zugeordneten Betriebssignals mit zumindest einem entsprechenden an das Robotersystem 2, insbesondere die Steuerungsvorrichtung 4, gerichteten Steuerbefehl ausgelöst werden, wenn die entsprechende virtuelle Taste konfigurationsgemäß aktivierbar ist. Die virtuelle Taste 5a stellt im vorliegenden Ausführungsbeispiel eine gegenwärtig gesperrte und somit nicht aktivierbare Taste dar, sodass mit ihr kein derartiges Betriebssignal ausgelöst werden kann, solange sie sich weiter im gesperrten Zustand befindet. Die weitere virtuelle Taste 5b ist dagegen gegenwärtig aktivierbar, sodass mittels ihrer Betätigung die Erzeugung und Übermittlung eines entsprechenden an die Steuerungsvorrichtung 4 gerichteten Betriebssignals ausgelöst werden kann, solange sie konfigurationsgemäß aktivierbar bleibt.

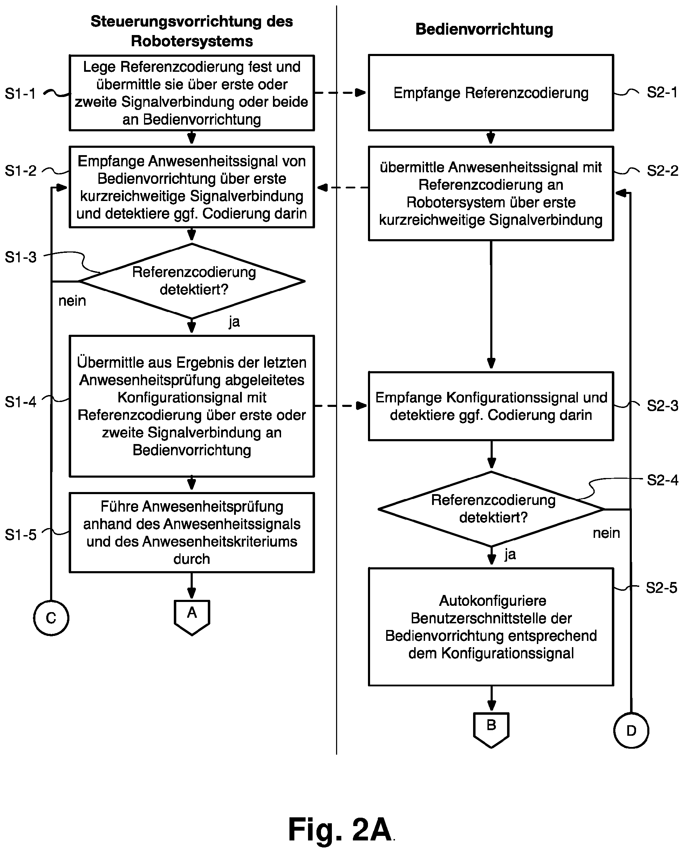

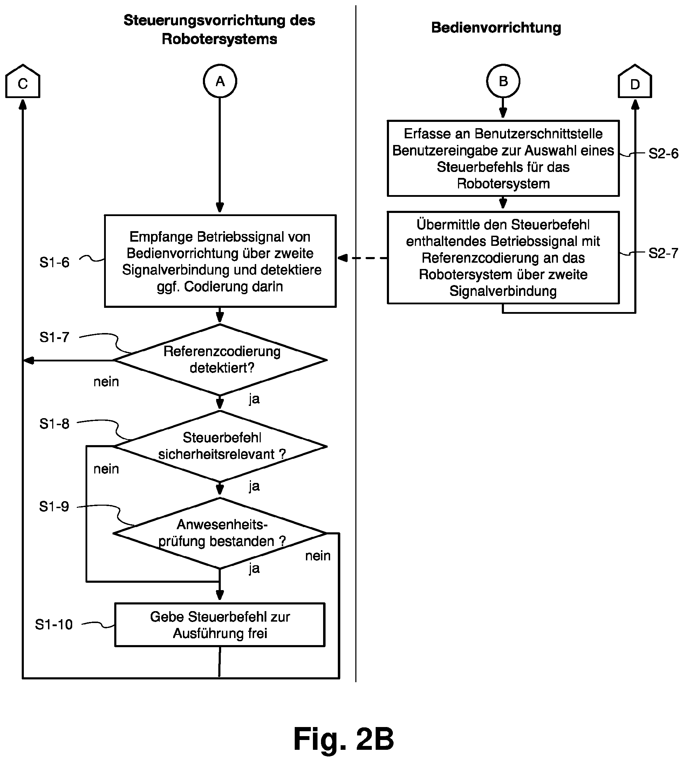

Der Betrieb des Systems 1, insbesondere des Teilsystems 2, wird nun unter weiterer Bezugnahme auf Fig. 1 anhand der in den **Figuren 2A** **und** **2B** illustrierten Verfahren erläutert, wobei die Figuren 2A und 2B über entsprechende Konnektoren A bis D miteinander verbunden sind und insgesamt einen zusammenhängenden Verfahrensablauf darstellen. Die jeweils linke Seite dieser Figuren zeigt eine Ausführungsform eines Verfahrens (Schritte S1-1 bis S1-10), welches auf der Steuerungsvorrichtung 4 des Robotersystems 2 ausgeführt wird, und dort insbesondere mittels eines in der Steuervorrichtung 4 in einem Speicher abgelegten Computerprogrammcodes implementiert sein kann. Die jeweils rechte Seite dieser Figuren zeigt dagegen eine Ausführungsform eines Verfahrens (Schritte S2-1 bis S2-7), welches auf der Bedienvorrichtung 5 ausgeführt wird, und dort ebenfalls insbesondere mittels eines in der Bedienvorrichtung 5 in einem Speicher desselben abgelegten Computerprogramcodes implementiert sein kann. Wie in den Figuren 2A und 2B dargestellt und im Weiteren genauer erläutert, stehen die beiden Verfahren in Wechselwirkung, um in ihrem Zusammenspiel eine automatische Absicherung des mittels der mobilen Bedienvorrichtung 5 gesteuerten Betriebs des Robotersystems 2 zu ermöglichen.

Zu Beginn des Verfahrensablauf steht ein Pairing-Prozess, der die Schritte S1-1 und S2-1 umfasst, wobei im Schritt S1-1 durch die Steuervorrichtung 4 eine Referenzkodierung für sie selbst beziehungsweise das Robotersystem 2 festgelegt wird und diese Referenzkodierung über die erste Signalverbindung 12 oder die zweite Signalverbindung 13, oder über beide, an die Bedienvorrichtung 5 übermittelt und dort im Schritt S2-1 empfangen wird. Die Referenzkodierung kann insbesondere aus einer eineindeutigen Kennung des Robotersystems, insbesondere seiner Steuerungsvorrichtung, abgeleitet werden oder dieser entsprechen, wobei die Kennung insbesondere eine Seriennummer des Robotersystems sein kann. Somit verfügen nun beide Seiten der Signalverbindungen, d. h. sowohl Steuerungsvorrichtung 4 als auch die Bedienvorrichtung 5, über dieselbe dem Robotersystem beziehungsweise seiner Steuerungsvorrichtung 4 zugeordnete Referenzkodierung, mittels derer auf das Robotersystem 2 bzw. die Steuerungsvorrichtung 4 bezogene Funksignale von anderen Funksignalen, beispielsweise für andere Robotersysteme oder Bedienvorrichtungen, unterschieden werden können.

In einem Schritt S2-2 übermittelt die Bedienvorrichtung 5 ein die Referenzkodierung enthaltendes Anwesenheitssignal über die erste Signalverbindung 12 an die Steuerungsvorrichtung 4 des Robotersystems 2. In einem dazu korrespondierenden Schritt S1-2 empfängt die Steuerungsvorrichtung 4 ein Anwesenheitssignal und detektiert eine darin gegebenenfalls enthaltene Codierung und prüft diese in einem weiteren Schritt S1-3 daraufhin, ob es sich um die Referenzkodierung handelt. Ist dies nicht der Fall (S1-3 - nein), verzweigt das Verfahren zum Schritt S1-2 zurück. Andernfalls (S1-3 - ja), insbesondere wenn es sich bei dem empfangenen Anwesenheitssignal um ein fehlerfrei empfangendes Anwesenheitssignal der zugeordneten Bedienvorrichtung 5 handelt, wird im Schritt S1-3 die Referenzkodierung als solche erkannt und das Verfahren auf Seiten der Steuerungsvorrichtung mit einem Schritt S1-4 fortgesetzt. In diesem erfolgt eine Übermittlung eines die Referenzkodierung enthaltenden Konfigurationssignals, welches aus dem Ergebnis der letzten zuvor ausgeführten Anwesenheitsprüfung abgeleitet ist, über die erste oder die zweite Signalverbindung, oder über beide, an die Bedienvorrichtung 5. Im korrespondierenden Schritt S2-3 wird auf Seiten der Bedienvorrichtung das Konfigurationssignal an der Bedienvorrichtung 5 empfangen. Wird dabei die Referenzkodierung erfolgreich detektiert (S2-4 - ja), führt die Bedienvorrichtung 5 im Schritt 2-5 eine Autokonfiguration ihrer Benutzerschnittstelle entsprechend dem Konfigurationssignal aus. Andernfalls (S2-4 - nein) erfolgt ohne Ausführung des Schritts 2-5 eine Zurückverzweigung und zum Schritt S2-2.

Auf Seiten des Robotersystems erfolgt sodann ein weitere Schritt 1-5, in dem anhand des Anwesenheitssignals und eines vorbestimmten Anwesenheitskriteriums eine Anwesenheitsprüfung durchgeführt wird. Das Anwesenheitskriterium kann dabei insbesondere in Abhängigkeit von einer Signalstärke des empfangenen Anwesenheitssignals, einer erkannten und insbesondere gegebenenfalls mittels eines Fehlerkorrekturverfahrens gemäß einer Kanalkodierung bestimmten und korrigierten Übertragungsfehlers (zum Beispiel Bitfehlerrate) oder einer seit dem letzten Empfang eines vorausgehenden Anwesenheitssignals von der Bedienvorrichtung 5 abgelaufenen Zeitspanne definiert sein. Auch ist es möglich, das Anwesenheitskriterium in Abhängigkeit davon zu definieren, ob bezüglich der ersten und/oder zweiten Signalverbindung eine Änderung des für die Signalverbindung verwendeten Funkzugangspunkts (z.B. WLAN-Access-Point) stattgefunden hat, was auf eine größere Entfernung d der Bedienvorrichtung 5 von der Steuerungsvorrichtung 4 schließen lässt, wenn sich diese im Funkgebiet eines anderen Funkzugangspunkt befindet und die erste bzw. zweite Signalverbindung zuvor über diesen anderen Funkzugangspunkt lief. Schließlich kann das Anwesenheitskriterium auch in Abhängigkeit vom Ergebnis einer funkbasierten Triangulation zur Abstandsbestimmung definiert sein.

Zum Zwecke der Steuerung des Robotersystems 2 kann in einem Schritt S2-6 an einer Benutzerschnittstelle der Bedienvorrichtung 5 eine Benutzereingabe zur Auswahl eines Steuerbefehls für das Robotersystem 2 erfasst werden. Der Steuerbefehl wird sodann im Schritt S2-7 mittels eines entsprechenden Betriebssignals, welches auch mit der Referenzkodierung versehen wird, über die zweite Signalverbindung 13 an die Steuerungsvorrichtung 4 des Robotersystems 2 übermittelt und dort in einem Schritt S1-6 empfangen. An der Steuerungsvorrichtung 4 findet sodann wiederum ein Detektieren der Codierung im empfangenen Betriebssignal sowie im Schritt S1-7 deren Abgleich mit der Referenzkodierung statt. Kann die Referenzkodierung dabei in dem Betriebssignal nicht erkannt werden (S1-7 - nein), so verzweigt das steuerungsvorrichtungsseitige Verfahren zum Schritt S1-2 zurück.

Andernfalls (S1-6 - ja) folgt ein Schritt S1-8, bei dem eine Prüfung dahingehend erfolgt, ob es sich bei dem Steuerbefehl aus dem Betriebssignal um einen sicherheitsrelevanten Steuerbefehl, insbesondere um einen Bewegungsbefehl für eine oder mehrere Komponenten des Robotersystems 2, handelt. Ist dies nicht der Fall (S1-8 - nein), so erfolgt unmittelbar in einem Schritt S1-10 eine Freigabe des Steuerbefehls zur Ausführung durch das Robotersystem 2 und sodann eine Rückverzweigung zu Schritt 1.2 für einen erneuten Durchlauf. Andernfalls (S1-8 - ja) verzweigt das Verfahren im folgenden Schritt S1-9 in Abhängigkeit vom Ergebnis der Anwesenheitsprüfung aus Schritt S1-5 ebenfalls zum Schritt S1-10, wenn die Anwesenheitsprüfung bestanden wurde (S1-9 - ja) und andernfalls (S1-9 - nein) unter Auslassung des Schritts S1-10 für einen erneuten Durchlauf zurück zu Schritt S1-2. Auf Seiten der Bedienvorrichtung wird nach Schritt S2-7 zum Schritt S2-2 zurückverzweigt.

Somit erfolgt mittels der in Wechselwirkung stehenden Verfahren eine automatische Absicherung des mittels der mobilen Bedienvorrichtung 5 gesteuerten Betriebs des Robotersystems 2, sodass zum einen an der Bedienvorrichtung 5 nur dem vorausgegangenen Konfigurationssignal, welches sich wiederum aus der vorangegangenen Anwesenheitsprüfung ableitet, entsprechende Steuerungen des Robotersystems 2 auslösen lassen. Zum anderen kann selbst beim erfolgreichen Absetzen eines Steuerungsbefehls dessen Freigabe zur Ausführung auf dem Robotersystem 2 verweigert werden, wenn sich gemäß der zuletzt ausgeführten Anwesenheitsprüfung die Bedienvorrichtung 5 nicht in einer zur Ausführung des Steuerbefehls durch das Robotersystem aus Sicherheitsgründen erforderlichen Nähe zur Steuerungsvorrichtung 4, insbesondere zu dessen Notausschalter 4c befindet.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand abgewichen wird.

### Bezugszeichenliste

- 1: erfindungsgemäßes System, einschließlich Robotersystem
- 2: Robotersystem
- 3: System zur Absicherung eines mittels einer mobilen Bedienvorrichtung gesteuerten Betriebs des Robotersystems 2
- 4: Steuerungsvorrichtung
- 4a: Antenne für erste Signalverbindung
- 4b: Antenne für zweite Signalverbindung
- 4c: Notaus-Auslöser, insbesondere Notausschalter
- 5: Bedienvorrichtung
- 5a: deaktivierte virtuelle Taste auf Benutzerschnittstelle
- 5b: aktivierbare virtuelle Taste auf Benutzerschnittstelle
- 6: Roboter
- 7: rotierbare Peripherievorrichtung
- 8: Werkstück
- 9: Roboterzelle mit Schutzzaun
- 10: Tür in Roboterzelle bzw. Schutzzaun
- 10a: Gelenk und Antrieb der Tür 10
- 11a: Steuer/Mess-Leitungen für Roboter 6
- 11b: Steuer/Mess-Leitungen für Peripherievorrichtung 7
- 11c: Steuer/Mess-Leitungen für Türantrieb 10a
- 12: erste, kurzreichweitige Signalverbindung
- 13: zweite Signalverbindung
- d: räumlicher Abstand zwischen Bedienvorrichtung 5 und Steuerungsvorrichtung 4

## Patentansprüche

1. Verfahren zur automatischen Absicherung eines mittels einer mobilen Bedienvorrichtung (5) gesteuerten Betriebs eines Robotersystems (2), wobei das Verfahren aufweist:
Wiederholtes Empfangen, am Robotersystem (2) und über eine kurzreichweitige erste Signalverbindung (12), von an das Robotersystem (2) durch eine zu seiner Bedienung konfigurierte mobile Bedienvorrichtung (5) übermittelten Anwesenheitssignalen;
Übermitteln eines aus dem Ergebnis einer Anwesenheitsprüfung abgeleiteten Konfigurationssignals von dem Robotersystem (2) an die Bedienvorrichtung (5) zur Anforderung einer Konfiguration einer zur Bedienung des Robotersystems (2) vorgesehenen Benutzerschnittstelle (5a, 5b) der Bedienvorrichtung (5) in Abhängigkeit von dem Ergebnis;
Empfangen, am Robotersystem (2) und über eine von der ersten Signalverbindung unabhängig ausgebildete zweite Signalverbindung (13), eines durch die Bedienvorrichtung (5) an das Robotersystem (2) übermittelten Betriebssignals, welches einen gemäß einem vorbestimmten Sicherheitskriterium als sicherheitsrelevant eingestuften Steuerbefehl, insbesondere einen Bewegungsbefehl, für das Robotersystem (2) enthält; und
Freigeben des sicherheitsrelevanten Steuerbefehls zu seiner Ausführung durch das Robotersystem (2) nur dann, wenn bei der Anwesenheitsprüfung festgestellt wird, dass das zuletzt empfangene Anwesenheitssignal ein im Hinblick auf die Feststellung einer räumlichen Nähe der Bedienvorrichtung (5) zu dem Robotersystem (2) vorbestimmtes Anwesenheitskriterium erfüllt.

2. Verfahren nach Anspruch 1, wobei das Konfigurationssignal ausgestaltet ist, eine Konfiguration der Benutzerschnittstelle (5a, 5b) anzufordern, bei der die für eine Benutzer verfügbaren Bedienoptionen an der Benutzerschnittstelle (5a, 5b) für das Robotersystem (2) in Abhängigkeit von dem Ergebnis festgelegt werden.

3. Verfahren nach Anspruch 2, wobei, wenn gemäß dem Ergebnis der Anwesenheitsprüfung das Anwesenheitskriterium nicht erfüllt wurde, das Konfigurationssignal ausgestaltet ist, eine Konfiguration der Benutzerschnittstelle (5a, 5b) anzufordern, gemäß der die für eine Benutzer verfügbaren Bedienoptionen an der Benutzerschnittstelle (5a, 5b) für das Robotersystem (2) so eingeschränkt werden, dass von der Benutzerschnittstelle (5a, 5b) aus keine Übermittlung von sicherheitsrelevanten Steuerbefehlen an das Robotersystem (2) ausgelöst werden kann.

4. Verfahren nach einem der vorausgehenden Ansprüche, wobei jedes über die zweite Signalverbindung (13) empfangene und einen Steuerbefehl enthaltenden Betriebssignal vor einer etwaigen Freigabe dieses Steuerbefehls zu seiner Ausführung auf dem Robotersystem (2) einer Sicherheitsprüfung dahingehend unterzogen wird, ob dieser Steuerbefehl gemäß einem vorbestimmten Sicherheitskriterium sicherheitsrelevant ist; und
nur falls dies gemäß dem Ergebnis dieser Prüfung nicht der Fall ist, dieser Steuerbefehl ohne oder unabhängig von einer vorherigen Durchführung der Anwesenheitsprüfung oder deren Ergebnis zu seiner Ausführung auf dem Robotersystem (2) freigegeben wird.

5. Verfahren nach einem der vorausgehenden Ansprüche, wobei das Anwesenheitskriterium in Abhängigkeit von zumindest einem der folgenden definiert ist:
- einer Signalstärke des am Robotersystem (2) empfangenen Anwesenheitssignals;
- ein Maß für das etwaige Auftreten von Übertragungsfehlern im am Robotersystem (2) empfangenen Anwesenheitssignal;
- einer seit einem letzten Empfang eines Anwesenheitssignals abgelaufenen Zeitspanne;
- einer etwaigen, seit einem letzten Empfang eines Anwesenheitssignals, gemäß entsprechender in dem empfangenen Betriebssignal enthaltenen Informationen erfolgten Änderung einer Identifikationskennung des Funkzugangspunkts, eines Routings für die Funkanbindung der Bedienvorrichtung (5) über die erste Signalverbindung (12) oder die zweite Signalverbindung (13), oder beide;
- einem mittels einer funkbasierten Triangulation bestimmten Abstandswert.

6. Verfahren nach einem der vorausgehenden Ansprüche, des Weiteren aufweisend:
Detektieren einer in dem empfangenen Anwesenheitssignal, Betriebssignal oder beiden enthaltenen Codierung;
Prüfen anhand der detektierten Codierung, ob sie mit einer dem Robotersystem (2) zugeordneten Referenzcodierung übereinstimmt und somit das empfangene Anwesenheitssignal, Betriebssignal oder beide an das Robotersystem (2) gerichtet ist bzw. sind; und
Blockieren einer etwaigen Freigabe des im empfangenen Betriebssignal enthaltenen Steuerbefehls, falls gemäß der detektierten Codierung das empfangene Anwesenheitssignal, Betriebssignal oder beide nicht an das Robotersystem (2) gerichtet ist bzw. sind.

7. Vorrichtung (4), insbesondere Steuerungsvorrichtung eines Robotersystems (2), zur Absicherung eines mittels einer mobilen Bedienvorrichtung (5) gesteuerten Betriebs eines Robotersystems (2), wobei die Vorrichtung zur Ausführung des Verfahrens nach einem der vorausgehenden Ansprüche eingerichtet ist.

8. Computerprogramm, das konfiguriert ist, bei seiner Ausführung auf einer Vorrichtung (4) nach Anspruch 7 diese zu veranlassen, das Verfahren nach einem der Ansprüche 1 bis 6 auszuführen.

9. Verfahren zur Bedienung eines Robotersystems (2) mittels einer mobilen Bedienvorrichtung (5), wobei das durch die mobile Bedienvorrichtung ausgeführte Verfahren aufweist: Regelmäßiges Übermitteln eines an das Robotersystem (2) gerichteten Anwesenheitssignals über eine kurzreichweitige erste Signalverbindung (12);
nach dem Übermitteln des Anwesenheitssignals, Empfangen, eines aus dem Ergebnis einer Anwesenheitsprüfung abgeleiteten Konfigurationssignals von dem Robotersystem (2), wobei das Konfigurationssignal eine Konfigurationsanforderung zur Konfiguration einer zur Bedienung des Robotersystems (2) vorgesehenen Benutzerschnittstelle (5a, 5b) der Bedienvorrichtung (5) darstellt oder enthält;
Konfigurieren der Benutzerschnittstelle (5a, 5b) in Abhängigkeit von der Konfigurationsanforderung im empfangenen Konfigurationssignal; und
Übermitteln eines an das Robotersystem (2) gerichteten Betriebssignals über eine von der ersten Signalverbindung unabhängig ausgebildete zweite Signalverbindung (13) in Reaktion auf eine zugeordnete Eingabe an der gemäß dem Konfigurationssignal konfigurierten Benutzerschnittstelle (5a, 5b).

10. Verfahren nach Anspruch 9, wobei das Anwesenheitssignal, das Betriebssignal oder beide mit einer dem Robotersystem (2) zugeordneten Referenzcodierung versehen werden, die kennzeichnet, dass das jeweilige Signal an das Robotersystem (2) gerichtet ist.

11. Verfahren nach Anspruch 10, des Weiteren aufweisend einen Pairing-Prozess, bei dem die Bedienvorrichtung (5):
von dem Robotersystem (2) eine diesem zugeordnete Referenzcodierung empfängt, oder
vor dem Übermitteln des Anwesenheitssignals die dem Robotersystem (2) zugeordnete Referenzcodierung generiert und übermittelt.

12. Verfahren nach einem der Ansprüche 9 bis 11, wobei das Konfigurieren der Benutzerschnittstelle (5a, 5b) eine Konfiguration der Benutzerschnittstelle (5a, 5b) bewirkt, gemäß der die für eine Benutzer verfügbaren Bedienoptionen an der Benutzerschnittstelle (5a, 5b) für das Robotersystem (2) so eingeschränkt sind, dass von der Benutzerschnittstelle (5a, 5b) aus keine Übermittlung von sicherheitsrelevanten Steuerbefehlen an das Robotersystem (2) ausgelöst werden kann.

13. Mobile Bedienvorrichtung (5), insbesondere handgehaltener mobiler Mehrzweckcomputer, die zur Ausführung des Verfahrens nach einem der Ansprüche 9 bis 12 konfiguriert ist.

14. Computerprogramm, das konfiguriert ist, bei seiner Ausführung auf einer mobilen Bedienvorrichtung (5) nach Anspruch 13 diese zu veranlassen, das Verfahren nach einem der Ansprüche 9 bis 12 auszuführen.

15. System (3) zur Absicherung eines mittels einer mobilen Bedienvorrichtung (5) gesteuerten Betriebs eines Robotersystems (2), aufweisend eine Vorrichtung nach Anspruch 7 sowie eine Bedienvorrichtung (5) nach Anspruch 13.

## Claims

1. Method for automatically ensuring safety for operation of a robot system (2), said operation being controlled by means of a mobile operator control device (5), the method comprising:
repeatedly receiving, at the robot system (2) and by way of a short-range first signal connection (12), presence signals relayed to the robot system (2) by a mobile operator control device (5) configured for operator control thereof;
relaying a configuration signal derived from the result of a presence check from the robot system (2) to the operator control device (5) to request a configuration of a user interface (5a, 5b), provided for operator control of the robot system (2), of the operator control device (5) on the basis of the result;
receiving, at the robot system (2) and by way of a second signal connection (13), which is formed independently of the first signal connection, an operating signal that is relayed to the robot system (2) by the operator control device (5) and contains a control command for the robot system (2), in particular a movement command, that is classified as safety-relevant according to a predetermined safety criterion; and
approving a safety-relevant control command for execution thereof by the robot system (2) only if the outcome of the presence check is that it is ascertained that the most recently received presence signal satisfies a presence criterion predetermined with regard to the ascertainment of a physical proximity of the operator control device (5) to the robot system (2).

2. Method according to Claim 1, wherein the configuration signal is designed to request a configuration of the user interface (5a, 5b) in which the operator control options available to a user on the user interface (5a, 5b) for the robot system (2) are stipulated on the basis of the result.

3. Method according to Claim 2, wherein, if, according to the result of the presence check, the presence criterion was not satisfied, the configuration signal is designed to request a configuration of the user interface (5a, 5b) according to which the operator control options available to a user on the user interface (5a, 5b) for the robot system (2) are limited to such an extent that no relaying of safety-relevant control commands to the robot system (2) can be initiated from the user interface (5a, 5b) .

4. Method according to one of the preceding claims, wherein each operating signal received by way of the second signal connection (13) and containing a control command is subjected, prior to any approval of this control command for execution thereof on the robot system (2), to a safety check to establish whether this control command is safety-relevant according to a predetermined safety criterion; and
only if this is not the case according to the result of this check is this control command approved for execution thereof on the robot system (2) without or irrespective of a previous performance of the presence check or the result thereof.

5. Method according to one of the preceding claims, wherein the presence criterion is defined on the basis of at least one of the following:
- a signal strength of the presence signal received at the robot system (2);
- a measure of the possible occurrence of transmission errors in the presence signal received at the robot system (2);
- a period of time that has elapsed since a presence signal was last received;
- a possible change that has occurred since a presence signal was last received, according to applicable information contained in the received operating signal, in an identification identifier of the radio access point of a routing for the radio link of the operator control device (5) by way of the first signal connection (12) or the second signal connection (13), or both;
- a distance value determined by means of a radio-based triangulation.

6. Method according to one of the preceding claims, additionally comprising:
detecting a coding contained in the received presence signal, operating signal or both;
taking the detected coding as a basis for checking whether it matches a reference coding associated with the robot system (2) and therefore the received presence signal, operating signal or both is or are directed to the robot system (2); and
blocking a possible approval of the control command contained in the received operating signal if, according to the detected coding, the received presence signal, operating signal or both is or are not directed to the robot system (2).

7. Device (4), in particular control device of a robot system (2), for ensuring safety for operation of a robot system (2), said operation being controlled by means of a mobile operator control device (5), the device being set up to carry out the method according to one of the preceding claims.

8. Computer program configured so as, when executed on a device (4) according to Claim 7, to cause said device to carry out the method according to one of Claims 1 to 6.

9. Method for operator control of a robot system (2) by means of a mobile operator control device (5), the method carried out by the mobile operator control device comprising:
regularly relaying a presence signal directed to the robot system (2) by way of a short-range first signal connection (12);
after the presence signal has been relayed, receiving a configuration signal derived from the result of a presence check from the robot system (2), the configuration signal being or containing a configuration request for configuration of a user interface (5a, 5b), provided for operator control of the robot system (2), of the operator control device (5);
configuring the user interface (5a, 5b) on the basis of the configuration request in the received configuration signal; and
relaying an operating signal directed to the robot system (2) by way of a second signal connection (13), which is formed independently of the first signal connection, in response to an associated input on the user interface (5a, 5b) configured according to the configuration signal.

10. Method according to Claim 9, wherein the presence signal, the operating signal or both are provided with a reference coding associated with the robot system (2) that identifies that the respective signal is directed to the robot system (2).

11. Method according to Claim 10, additionally comprising a pairing process in which the operator control device (5):
receives from the robot system (2) a reference coding associated therewith, or
generates and relays the reference coding associated with the robot system (2) before the presence signal is relayed.

12. Method according to the one of Claims 9 to 11, wherein the configuring of the user interface (5a, 5b) brings about a configuration of the user interface (5a, 5b) according to which the operator control options available to a user on the user interface (5a, 5b) for the robot system (2) are limited to such an extent that no relaying of safety-relevant control commands to the robot system (2) can be initiated from the user interface (5a, 5b) .

13. Mobile operator control device (5), in particular handheld mobile general-purpose computer, configured to carry out the method according to one of Claims 9 to 12.

14. Computer program configured so as, when executed on a mobile operator control device (5) according to Claim 13, to cause said operator control device to carry out the method according to one of Claims 9 to 12.

15. System (3) for ensuring safety for operation of a robot system (2) controlled by means of a mobile operator control device (5), comprising a device according to Claim 7 and an operator control device (5) according to Claim 13.

## Revendications

1. Procédé permettant de sécuriser automatiquement un fonctionnement d'un système de robot (2), commandé au moyen d'un dispositif d'actionnement mobile (5), le procédé présentant les étapes consistant à :
recevoir de façon répétée, au niveau du système de robot (2) et par une première liaison de signalisation (12) à courte portée, des signaux de présence transmis au système de robot (2) par un dispositif d'actionnement mobile (5) configuré pour commander ledit système ;
transmettre un signal de configuration, dérivé du résultat d'un contrôle de présence, du système de robot (2) au dispositif d'actionnement (5) pour demander une configuration d'une interface utilisateur (5a, 5b) du dispositif d'actionnement (5), prévue pour actionner le système de robot (2) en fonction du résultat ;
recevoir, au niveau du système de robot (2) et par une deuxième liaison de signalisation (13), réalisée indépendamment de la première liaison de signalisation, un signal de fonctionnement transmis par le dispositif d'actionnement (5) au système de robot (2) et qui contient une instruction de commande classifiée comme importante pour la sécurité selon un critère de sécurité prédéterminé, en particulier une instruction de mouvement, pour le système de robot (2) ; et
valider l'instruction de commande importante pour la sécurité pour son exécution par le système de robot (2) uniquement si lors du contrôle de présence il est constaté que le signal de présence reçu en dernier satisfait un critère de présence prédéterminé en vue de la constatation d'une proximité physique entre le dispositif d'actionnement (5) et le système de robot (2) .

2. Procédé selon la revendication 1, dans lequel le signal de configuration est conçu pour demander une configuration de l'interface utilisateur (5a, 5b) dans laquelle les options d'actionnement à la disposition d'un utilisateur au niveau de l'interface utilisateur (5a, 5b) pour le système de robot (2) sont définies en fonction du résultat.

3. Procédé selon la revendication 2, dans lequel, si selon le résultat du contrôle de présence, le critère de présence n'a pas été satisfait, le signal de configuration est conçu pour demander une configuration de l'interface utilisateur (5a, 5b) selon laquelle les options d'actionnement à la disposition d'un utilisateur au niveau de l'interface utilisateur (5a, 5b) pour le système de robot (2) sont limitées de telle sorte qu'à partir de l'interface utilisateur (5a, 5b) aucune transmission d'instructions de commande importantes pour la sécurité ne peut être déclenchée à l'intention du système de robot (2).

4. Procédé selon l'une quelconque des revendications précédentes, dans lequel chaque signal de fonctionnement reçu par la deuxième liaison de signalisation (13) et contenant une instruction de commande est soumis avant une validation éventuelle de cette instruction de commande pour son exécution sur le système de robot (2) à un contrôle de sécurité pour savoir si cette instruction de commande est importante pour la sécurité selon un critère de sécurité prédéterminé ; et
uniquement si ce n'est pas le cas selon le résultat de ce contrôle, cette instruction de commande est validée sans ou indépendamment d'une exécution préalable du contrôle de présence ou de son résultat pour son exécution sur le système de robot (2).

5. Procédé selon l'une quelconque des revendications précédentes, dans lequel le critère de présence est défini en fonction d'au moins l'un des points suivants :
- une intensité de signal du signal de présence reçu au niveau du système de robot (2) ;
- une mesure de l'occurrence éventuelle d'erreurs de transmission dans le signal de présence reçu au niveau du système de robot (2) ;
- un laps de temps expiré depuis une dernière réception d'un signal de présence ;
- une modification éventuelle d'un identifiant du point d'accès radioélectrique, ayant eu lieu depuis une dernière réception d'un signal de présence, selon des informations correspondantes contenues dans le signal de fonctionnement reçu, d'un acheminement pour la connexion radio du dispositif d'actionnement (5) par la première liaison de signalisation (12) ou la deuxième liaison de signalisation (13), ou les deux ;
- une valeur de distance déterminée au moyen d'une triangulation par radio.

6. Procédé selon l'une quelconque des revendications précédentes, présentant en outre les étapes consistant à :
détecter un codage contenu dans le signal de présence reçu, le signal de fonctionnement ou les deux ;
contrôler à l'aide du codage détecté s'il coïncide avec un codage de référence associé au système de robot (2), et donc le signal de présence reçu, le signal de fonctionnement ou les deux sont adressés au système de robot (2) ; et
bloquer une validation éventuelle de l'instruction de commande contenue dans le signal de fonctionnement reçu si selon le codage détecté, le signal de présence reçu, le signal de fonctionnement ou les deux ne sont pas adressés au système de robot (2).

7. Dispositif (4), en particulier dispositif de commande d'un système de robot (2) permettant de sécuriser un fonctionnement d'un système de robot (2) commandé au moyen d'un dispositif d'actionnement mobile (5), le dispositif étant conçu pour exécuter le procédé selon l'une quelconque des revendications précédentes.

8. Programme informatique qui est configuré, lorsqu'il est exécuté sur un dispositif (4) selon la revendication 7, pour faire que celui-ci exécute le procédé selon l'une quelconque des revendications 1 à 6.

9. Procédé permettant d'actionner un système de robot (2) au moyen d'un dispositif d'actionnement mobile (5), le procédé exécuté par le dispositif d'actionnement mobile présentant les étapes consistant à :
transmettre de façon répétée un signal de présence adressé au système de robot (2) par une première liaison de signalisation (12) à courte portée ;
après la transmission du signal de présence, recevoir du système de robot (2) un signal de configuration dérivé du résultat d'un contrôle de présence, dans lequel le signal de configuration représente ou contient une demande de configuration pour configurer une interface utilisateur (5a, 5b) du dispositif d'actionnement (5), prévue pour actionner le système de robot (2) ;
configurer l'interface utilisateur (5a, 5b) en fonction de la demande de configuration dans le signal de configuration reçu ; et
transmettre un signal de fonctionnement adressé au système de robot (2) par une deuxième liaison de signalisation (13), réalisée indépendamment de la première liaison de signalisation, en réponse à une entrée associée au niveau de l'interface utilisateur (5a, 5b) configurée selon le signal de configuration.

10. Procédé selon la revendication 9, dans lequel le signal de présence, le signal de fonctionnement ou les deux sont munis d'un codage de référence associé au système de robot (2) et qui indique que le signal respectif est adressé au système de robot (2).

11. Procédé selon la revendication 10, présentant en outre une procédure d'appariement dans laquelle le dispositif d'actionnement (5) :
reçoit du système de robot (2) un codage de référence qui est associé à celui-ci,
ou
avant la transmission du signal de présence, génère et transmet le codage de référence associé au système de robot (2).

12. Procédé selon l'une quelconque des revendications 9 à 11, dans lequel la configuration de l'interface utilisateur (5a, 5b) provoque une configuration de l'interface utilisateur (5a, 5b) selon laquelle les options d'actionnement à la disposition d'un utilisateur au niveau de l'interface utilisateur (5a, 5b) pour le système de robot (2) sont limitées de telle sorte qu'aucune transmission d'instructions de commande importantes pour la sécurité ne peut être déclenchée à partir de l'interface utilisateur (5a, 5b) vers le système de robot (2).

13. Dispositif d'actionnement mobile (5), en particulier ordinateur multi-usage mobile portatif, qui est configuré pour exécuter le procédé selon l'une quelconque des revendications 9 à 12.

14. Programme informatique, qui est configuré, lorsqu'il est exécuté sur un dispositif d'actionnement mobile (5) selon la revendication 13, pour faire que celui-ci exécute le procédé selon l'une quelconque des revendications 9 à 12.

15. Système (3) permettant de sécuriser un fonctionnement d'un système de robot (2) commandé au moyen d'un dispositif d'actionnement mobile (5), présentant un dispositif selon la revendication 7 ainsi qu'un dispositif d'actionnement (5) selon la revendication 13.
